# EUROPÄISCHE PATENTSCHRIFT

(11) **EP 2 491 465 B1**
(45) Veröffentlichungstag und Bekanntmachung des Hinweises auf die Patenterteilung: **03.12.2014**
(21) Anmeldenummer: 10766263.7
(22) Anmeldetag: 07.10.2010
(51) Int. Cl.: G05B 19/042, G05B 19/418

(54) **PROZESSKONTROLLANORDNUNG FÜR EINE ANLAGE DER PROZESS- UND/ODER AUTOMATISIERUNGSTECHNIK**
PROCESS CONTROL ASSEMBLY FOR A PROCESS AND/OR AUTOMATION TECHNOLOGY APPARATUS
AGENCEMENT DE CONTRÔLE DE PROCESSUS POUR UNE INSTALLATION DE COMMANDE DE PROCESSUS ET/OU D'AUTOMATISATION

(30) Priorität: 21.10.2009 DE 102009045901
(43) Veröffentlichungstag der Anmeldung: 29.08.2012
(73) Patentinhaber: Endress + Hauser Process Solutions AG, 4153 Reinach (CH)
(72) Erfinder: KÖLBLIN, Robert, 79539 Lörrach (DE); DA SILVA NETO, Eugenio, Ferreira, CH-4105 Biel-Benken (CH); MANEVAL, Michael, 79650 Schopfheim (DE); REINKENSMEIER, Jörg, 79585 Steinen (DE); PÖSCHMANN, Axel, CH-4057 Basel (CH)
(74) Vertreter: Andres, Angelika Maria
(86) Internationale Anmeldenummer: PCT/EP2010/064979
(87) Internationale Veröffentlichungsnummer: WO 2011/047964

(56) Entgegenhaltungen:
- EP-A1- 2 109 259
- WO-A1-2006/069691
- WO-A2-2007/074105
- DE-A1- 10 049 049
- DE-A1-102004 003 605

## Beschreibung

Die Erfindung bezieht sich auf eine Prozesskontrollanordnung für eine Anlage der Prozess- und/oder Automatisierungstechnik, mit mehreren, insbesondere unterschiedlichen, Feldbussystemen, und mit mehreren Feldbusschnittstellen, wobei jedes der Feldbussysteme mit wenigstens einer der Feldbusschnittstellen verbunden ist.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Feldgeräte wie bspw. Aktoren, die z. B. als Ventile den Durchfluss einer Flüssigkeit in einem Rohrleitungsabschnitt oder als Pumpen den Füllstand in einem Behälter beeinflussen. Eine Vielzahl solcher Feldgeräte wird von der Fa. Endress + Hauser hergestellt und vertrieben.

In der Regel sind Feldgeräte in modernen Fabrikationsanlagen über Feldbussysteme (HART, Profibus, Foundation Fieldbus, etc.) mit übergeordneten Einheiten (z. B. Leitsystemen, Steuereinheiten etc.) verbunden. Diese übergeordneten Einheiten dienen unter anderem zur Prozesssteuerung, Prozessvisualisierung, Prozessüberwachung sowie zur Inbetriebnahme und zum Bedienen der Feldgeräte.

In einer solchen Anlage können mehrere Feldbussysteme zum Einsatz kommen. Die eingesetzten Feldbussysteme können dabei auch unterschiedlichen Typs sein. Die Anlage kann bspw. über eine Zelle, welche einem Abschnitt in der Anlage entspricht, verfügen, in der mittels des Profibus Protokolls über ein Feldbussystem kommuniziert wird, und in einer anderen Zelle prozessrelevante Informationen mittels des Foundation Fieldbus Protokolls über ein anderes Feldbussystem austauschen. Eine Anlage mit mehreren Feldbussystemen unterschiedlichen Typs ist z.B. in der Offenlegungsschrift DE 10049049 A1 beschrieben. Dort ist ein Prozesssteuernetzwerk über eine zentrale Steuereinheit und über jeweils voneinander unabhängige Schnittstellen mit mehreren Feldbussystemen verbunden.

Ein weiteres Beispiel des Stands der Technik wird in der Offenlegungsschrift DE 10 2004 003605 A1 beschrieben. Dort wird ein integriertes Diagnosesystem in einer Prozessanlage offenbart. Die Prozessanlage umfasst ein Sicherheitssystem, das physikalisch und logisch in ein Prozesssteuerungssystem eingegliedert ist.

An Feldbussysteme werden vom Anwender unterschiedliche Anforderungen gestellt; zum einen die Prozesssteuerung und zum anderen die Anlagenüberwachung bzw. die Anlagenvisualisierung. Die Gesamtheit der Geräte in einer solchen Anlage, die zur Prozesssteuerung oder zur Anlagenüberwachung und Anlagenvisualisierung dienen, und deren Anordnung wird als Prozesskontrollanordnung bezeichnet. Die Prozesssteuerung wird dabei vom Anlagenbetreiber über ein Prozesssteuerungssystem durchgeführt.

Zur Anlagenüberwachung kann es aus Sicherheitsgründen erforderlich sein, einen von dem Prozesssteuerungssystem separaten Zugang zu dem Feldbussystem einzurichten. Aus dem Stand der Technik sind bereits Feldbusschnittstellen mit dieser Funktionalität bekannt geworden. Beispielsweise sind Feldbussysteme in Unternehmensnetzwerke, die auf Ethernetbasis arbeiten, integriert. Mittels der Feldbusschnittstellen kann so aus unterschiedlichen Bereichen eines Unternehmens auf Prozess- bzw. Feldgerätedaten zugegriffen werden. Zur weltweiten Kommunikation können die Unternehmensnetzwerke auch mit öffentlichen Netzwerken, z. B. dem Internet, verbunden sein.

Zum Bedienen der Feldgeräte sind entsprechende Bedienprogramme notwendig. Diese Bedienprogramme können bspw. auf einem Rechner, der in einer übergeordneten Kommunikationsebene integriert ist, ablaufen (z. B. FieldCare von Endress+Hausers). Die Bedienprogramme weisen verschiedene Funktionalitäten im Hinblick auf die Anlagenüberwachung (das sog. Asset Management) auf.

Der Zugriff auf den Feldbus von einer übergeordneten Kommunikationsebene wie bspw. einem Unternehmensnetzwerk auf einen Feldbus ist bislang mit einem hohen Verkabelungsaufwand als auch mit einer aufwendigen Daten-Adressierung verbunden. So muss heutzutage jede Feldbusschnittstelle einzeln mit dem übergeordneten Bussystem verkabelt werden, um sie mit dem übergeordneten Bussystem zu verbinden. Kommen in einer Anlage mehrere Feldbusschnittstellen zum Einsatz, so muss jedem dieser Geräte jeweils eine eigene Adresse, bspw. eine IP-Adresse, in der übergeordneten Kommunikationsebene zugewiesen werden. Zudem sind Anlageninformationen nicht zentral abrufbar, sondern nur verteilt auf die Speichereinheiten der jeweiligen Feldbusschnittstellen der Anlage vorhanden und von dort separat abrufbar.

Darüber hinaus deckt ein Typ von Feldbusschnittstelle bspw. jeweils nur einen Feldbustyp ab. Überdies müssen die Geräte individuell konfiguriert als auch parametriert und aktualisiert werden.

Der Erfindung liegt somit die Aufgabe zugrunde, den Aufbau und den Betrieb einer Anlage der Prozess- und/oder Automatisierungstechnik mit mehreren Feldbussystemen zu vereinfachen.

Die Aufgabe wird gemäß dem Gegenstand des Anspruchs 1 gelöst.

Erfindungsgemäß bilden die Feldbusschnittstellen ein eigenständiges Feldbusschnittstellen-Netzwerk, insbesondere ein eigenständiges Local Area Network LAN, in welchem die Feldbusschnittstellen in Reihe miteinander verbunden sind. Die erste der Feldbusschnittstellen kann dabei für die Adressierung der Signale und der Feldbusschnittstellen in dem LAN verwendet werden. Eine solche Adressierung kann bspw. gemäß dem Ethernet Standard und/oder eines Internet Protocols erfolgen.

Erfindungsgemäß ist das Feldbusschnittstellen-Netzwerk ein selbstkonfigurierendes Netzwerk. Dadurch kann eine zusätzliche Feldbusschnittstelle in das Feldbusschnittstellen-Netzwerk integriert werden, ohne dass ein Eingriff bspw. in Form einer Konfiguration der einzufügenden Feldbusschnittstelle durch einen Benutzer der Anlage erforderlich wird. Die Integration der zusätzlichen Feldbusschnittstelle kann dann vielmehr durch das Feldbusschnittstellen-Netzwerk selbst erfolgen, indem bspw. für eine zu integrierende Feldbusschnittstelle eine neue Adresse, vergeben wird. Ein entsprechendes Programm, bspw. ein Host der die Adressen verwaltet und auf einer der Feldbusschnittstellen installiert ist, kann dafür in einer der Feldbusschnittstellen hinterlegt sein. Ein Beitritt in bzw. ein Austritt aus dem Feldbusschnittstellen-Netzwerk einer Feldbusschnittstelle kann dadurch automatisch erkannt und die Zuordnung von Daten, Aufgaben und Ressourcen verteilt werden.

Durch die vorgeschlagene Anordnung der Feldbusschnittstellen kann einerseits der Verkabelungsaufwand verringert und andererseits die Kommunikation zwischen den Feldgeräten und der übergeordneten Kommunikationsebene vereinfacht werden. Die übergeordnete Kommunikationsebene muss erfindungsgemäß nur noch mit einer ersten der Feldbusschnittstellen verbunden werden. Die Feldbusschnittstellen können dann ausgehend von der ersten der Feldbusschnittstellen untereinander verbunden werden. Daher ist nur noch eine Adresse in der übergeordneten Kommunikationsebene erforderlich, die an die erste der Feldbusschnittstellen vergeben wird, um mit mehreren Feldbussystemen zu kommunizieren. Dies verringert in der übergeordneten Kommunikationsebene den Aufwand zur Adressierung von Signalen an die Feldgeräte in den Feldbussystemen.

Weitere Feldbusschnittstellen können in Reihe mit der ersten der Feldbusschnittstellen verbunden werden bzw. verbindbar sein. Dadurch können auch Feldbussysteme unterschiedlichen Typs wie bspw. Profibus, Foundation Fieldbus, CANOpen etc. integriert werden. Es ist eine Idee der Erfindung, die in Reihe angeordneten Feldbusschnittstellen zur Kommunikation zwischen der übergeordneten Kommunikationsebene und den Feldbussystemen zu nutzen. Daraus ergibt sich der Vorteil, dass bspw. auf einen Switch zur Kommunikation der Feldbussysteme bzw. der Feldbusschnittstellen mit der übergeordneten Kommunikationsebene verzichtet werden kann.

Die bereits erwähnten Bedienprogramme, die bspw in einer Rechnereinheit der übergeordneten Kommunikationsebene ablaufen, adressieren bei allfälligen Abfragen nur noch die erste der in Reihe geschalteten Feldbusschnittstellen. Die erste der Feldbusschnittstellen kann die Abfragen dann bspw. weiterleiten. Alternativ kann die erste der Feldbusschnittstellen ein Prozessabbild enthalten, aus dem heraus angeforderte Daten entnommen werden. Informationen über die mit den Feldbusschnittstellen verbundenen Feldbussysteme und die darin enthaltenen Feldgeräte können dann auf diese Art und Weise durch die erste der Feldbusschnittstellen präsentiert werden.

In einer Ausgestaltung ist die erste der Feldbusschnittstellen in Reihe mit einer zweiten der Feldbusschnittstellen verbunden, und die zweite der Feldbusschnittstellen ist in

Reihe, insbesondere unmittelbar, hinter der ersten der Feldbusschnittstellen mit der ersten der Feldbusschnittstellen verbunden.

In einer weiteren Ausgestaltung ist jede einer vorhergehenden Feldbusschnittstelle, insbesondere unmittelbar, nachfolgende Feldbusschnittstelle mit der vorhergehenden Feldbusschnittstelle in Reihe verbunden. Das dadurch erzeugte System von Feldbusschnittstellen entspricht im Wesentlichen einer sog. Daisy-Chain Anordnung, bei der die Feldbusschnittstellen in Reihe miteinander verbunden sind. Ein Signal das für die nachfolgende Feldbusschnittstelle bestimmt ist, wird von der vorhergehenden Schnittstelle zur nachfolgenden übertragen. Die Feldbusschnittstellen können dadurch in Form einer Kette miteinander verbunden werden und Signale können zwischen Ihnen übertragen werden.

In einer weiteren Ausgestaltung ist eine vorhergehende Feldbusschnittstelle über eine Punkt-zu-Punkt Verbindung mit einer nachfolgenden Feldbusschnittstelle verbunden.

Diese Zwei entlang der Kette von Feldbusschnittstellen benachbarten Feldbusschnittstellen sind unmittelbar, durch eine sog. Direktverbindung, miteinander verbunden.

In einer weiteren Ausgestaltung sind die Feldbusschnittstellen topologisch betrachtet entlang einer Linie angeordnet. Jeweils zwei der Feldbusschnittstellen können dabei bspw. über ein Kabel miteinander verbunden werden.

In einer weiteren Ausgestaltung handelt es sich bei wenigstens zwei der Feldbussysteme um zueinander linienredundante Feldbussysteme.

In einer weiteren Ausgestaltung handelt es sich bei den zueinander linienredundanten Feldbussystemen um ein primäres Feldbussystem und um ein sekundäres Feldbussystem, wobei die Kommunikation zwischen Teilnehmern der zueinander linienredundanten Feldbussysteme, insbesondere in einem (störungsfreien) Normalbetrieb, mittels des primären Feldbussystems erfolgt, und dass, in dem Fall, dass die Kommunikation zwischen den Teilnehmern mittels des sekundären Feldbussystems erfolgt, der Zugriff von der übergeordneten Kommunikationsebene auf einen Teilnehmer des redundanten Feldbussystems, insbesondere automatisch, über die dem sekundären Feldbussystem zugeordnete Feldbusschnittstelle erfolgt. Dadurch kann bspw. ein in der übergeordneten Kommunikationsebene vorhandenes Plant Asset Management System Umschaltungen zwischen dem primären und sekundären System mitverfolgen.

In einer weiteren Ausgestaltung ist ein von einem Teilnehmer der übergeordneten Kommunikationsebene gesendetes, für eines der Feldbussysteme bestimmtes Signal wenigstens abschnittsweise über die in Reihe verbundenen Feldbusschnittstellen übertragbar. Bei dem,Signal kann es sich bspw. um eine Statusabfrage und/oder eine Parametereinstellung von einem der Feldgeräte oder der Feldbusschnittstellen handeln. Das Signal kann bspw. in Form eines Telegramms vorliegen.

In einer weiteren Ausgestaltung ist das Signal wenigstens bis zu der Feldbusschnittstelle übertragbar, die mit dem Feldbussystem verbunden ist, für die das Signal bestimmt ist. Dies kann bspw. durch eine Adressierung des Signals an ein bestimmtes Feldgerät oder eine bestimmte Feldbusschnittstelle erfolgen. Die Adressierung kann insbesondere mittels der ersten der Feldbusschnittstellen erfolgen. Die zu übertragenden Signale werden von einer Feldbusschnittstelle an die nächste weitergeleitet, bis sie ihren Bestimmungsort erreichen. Gleiches gilt natürlich falls Signale aus einem der Feldbussysteme an die übergeordnete Kommunikationsebene übertragen werden sollen: Die Signale werden aus einem Feldbussystem von einer der Feldbusschnittstellen an die jeweils vorhergehende Feldbusschnittstelle übertragen. Die erste der Feldbusschnittstellen speist die Signale dann in die übergeordnete Kommunikationsebene ein und/oder überträgt die Signale an eine Anzeige-/Bedieneinheit der übergeordneten Kommunikationsebene.

Erfindungsgemäß kann also die Gesamtheit der Feldbusschnittstellen ausgenutzt werden, um Signale zwischen verschiedenen Feldbussystem und einer übergeordneten Kommunikationsebene auszutauschen. Dabei kann jede Feldbusschnittstelle gleichzeitig bspw. als Repeater wirken. Um Überschneidungen zu verhindern, sind bei dieser Art der Vernetzung besondere Adressierungsverfahren erforderlich.

In einer weiteren Ausgestaltung ist ein Prozessabbild der an die Feldbusschnittstellen angeschlossenen Feldbussysteme in wenigstens einer der Feldbusschnittstellen gespeichert, welches Prozessabbild Daten von Teilnehmern der Feldbussysteme enthält. Insbesondere enthält das Prozessabbild Informationen über die Feldbussysteme und die in den Feldbussystemen befindlichen Feldgeräte. Das Prozessabbild kann dafür in einer Speichereinheit festgehalten werden. Die Speichereinheit kann bspw. in einer einzigen Feldbusschnittstelle, insbesondere der ersten der Feldbusschnittstellen, vorgesehen sein oder verteilt auf die verschiedenen Feldbusschnittstellen sein.

In einer weiteren Ausgestaltung ist das Prozessabbild über die erste der Feldbusschnittstellen abrufbar. Die erste Feldbusschnittstelle kann das Prozessabbild bspw. in einer Speichereinheit gespeichert haben oder die in verschiedene Speichereinheiten, welche bspw. auf mehrere Feldbusschnittstellen verteilt sind, hinterlegten Daten des Prozessabbilds abrufen.

In einer weiteren Ausgestaltung erfolgt die Zuordnung der Signale zu den Feldbusschnittstellen bzw. den Feldbussystemen anhand des gespeicherten Prozessabbildes. Dies ermöglicht eine schnellere Verarbeitung der Signale. Anfragen von der übergeordneten Kommunikationsebene können anhand von indem Prozessabbilde hinterlegten Daten verarbeitet werden. Das Prozessabbild kann unabhängig davon aktualisiert werden.

In einer weiteren Ausgestaltung handelt es sich bei der übergeordneten Kommunikationsebene um einen sog. offenen oder geschlossenen Bus, insbesondere um ein Ethernet.

In einer weiteren Ausgestaltung handelt es sich bei dem Feldbussystem um einen Feldbus, insbesondere um einen FOUNDATION Fieldbus, einen Profibus oder einen HART-Bus.

In einer weiteren Ausgestaltung weist wenigstens eine der Feldbusschnittstellen einen ersten Anschluss auf, der dazu dient, die Feldbusschnittstelle entweder mit der übergeordneten Kommunikationsebene oder einer vorhergehenden Feldbusschnittstelle zu verbinden; einen zweiten Anschluss auf, der dazu dient, die Feldbusschnittstelle mit dem Feldbussystem zu verbinden; und einen dritten Anschluss auf, der dazu dient, die Feldbusschnittstelle mit einer weiteren, insbesondere baugleichen, Feldbusschnittstelle zu verbinden. Durch die vorgeschlagenen Anschlüsse ist es möglich die Feldbusschnittstellen auf einfache Weise in Reihe miteinander zu verbinden. Außerdem kann eine solche Feldbusschnittstelle auch verwendet werden, um eine Verbindung mit der übergeordneten Kommunikationsebene herzustellen. Alternativ kann die Feldbusschnittstelle als eine der in Reihe geschalteten Feldbusschnittstellen dienen, die auf die erste der Feldbusschnittstellen folgt. Die vorgeschlagene Feldbusschnittstelle kann also je nach Anschlussart verschiedene Funktionen erfüllen.

In einer weiteren Ausgestaltung weist wenigstens die erste der Feldbusschnittstellen eine elektrische und/oder elektronische Einheit auf, die dazu dient, ein über den dritten Anschluss abgreifbares Signal zu erzeugen, welches erzeugte Signal im Wesentlichen einem über den ersten Anschluss empfangenen Signal entspricht oder ein solches empfangenes Signal repräsentiert. Eine solche Feldbusschnittstelle kann wie bereits erwähnt mit der übergeordneten Kommunikationsebene verbunden werden. In diesem Fall wird ein Signal, das für eines der Feldgeräte in einem der Feldbussysteme bestimmt ist, aus dem übergeordneten Bussystem über den ersten Anschluss der ersten der Feldbusschnittstellen empfangen. Mittels einer in der ersten der Feldbusschnittstellen vorgesehenen elektrischen und/oder elektronischen Einheit wir das Signal dann dekodiert und mit einer Feldbusschnittstellen-Netzwerk internen Adresse versehen, so dass das Signal innerhalb des Feldbusschnittstellen-Netzwerks an die Feldbusschnittstelle gesendet wird, die mit dem Feldbussystem verbunden ist, in dem sich das Feldgerät befindet für welches das Signal bestimmt ist. Mittels der Feldbusschnittstelle wird das dann so codierte Signal in ein Signal umgewandelt welches in dem Feldbussystem in dem sich das Feldgerät befindet lesbar ist.

In einer weiteren Ausgestaltung dient der erste Anschluss als Eingang und der dritte Anschluss als Ausgang für die von der übergeordneten Kommunikationsebene an das Feldbussystem übertragenen Signale.

In einer weiteren Ausgestaltung ist die Feldbusschnittstelle über den ersten Anschluss mit einem dritten Anschluss einer weiteren, im Wesentlichen baugleichen Feldbusschnittstelle verbindbar.

In einer weiteren Ausgestaltung ist jede der Feldbusschnittstellen mit genau einem Feldbussystem verbunden.

Die Erfindung wird anhand der nachfolgenden Zeichnungen näher erläutert. Es zeigt:
Fig. 1: eine schematische Darstellung des Aufbaus einer Prozesskontrollanordnung,
Fig. 2: eine schematische Darstellung einer Anordnung von Feldbusschnittstellen,
Fig.3 a), b), c), d): unterschiedliche redundante Anordnungen von Feldgeräten in einem Feldbussystem, und
Fig. 4: eine schematische Darstellung einer Prozesskontrollanordnung mit zueinander redundanten Feldbussystemen.

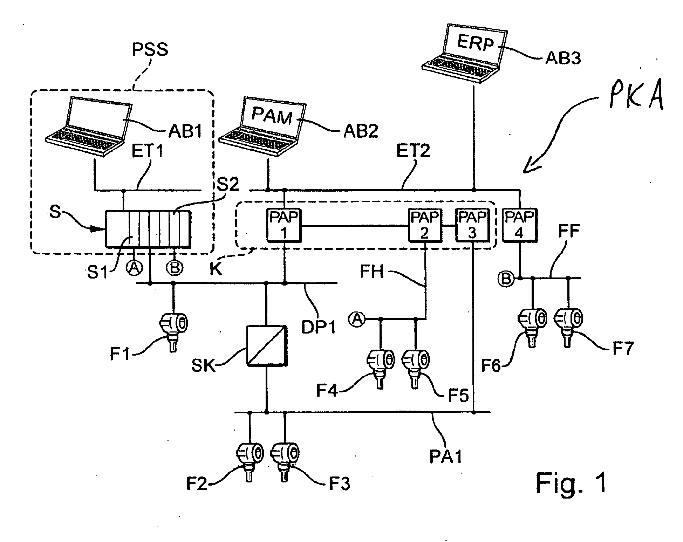

Figur 1 zeigt eine schematische Darstellung einer Prozesskontrollanordnung PKA einer Anlage der Prozessautomatisierungstechnik. Die Prozesskontrollanordnung PKA weist ein erstes Bussystem ET1 auf, das die Einheiten des Prozesssteuerungssystem PSS verbindet. Dabei handelt es sich um eine Anzeige-/Bedieneinheit AB1 und eine Steuereinheit S. Das Prozesssteuerungssystem PSS wird von einem Anlagenbetreiber zur Prozesssteuerung der Anlage verwendet.

Über eine Schnittstelle der Steuereinheit S ist das erste Bussystem ET1 mit einem ersten Feldbussystem DP1 verbunden. Bei dem ersten Feldbussystem DP1 handelt es sich um ein Profibus DP Feldbussystem, an welches Feldgeräte, symbolisch dargestellt durch das Feldgerät F1, angeschlossen sind. Das Profibus DP Feldbussystem DP1 wiederum ist über einen nicht-transparenten Segmentkoppler SK mit einem Profibus PA Feldbussystem PA1 verbunden, an dem ebenfalls Feldgeräte F2, F3 angeschlossen sind. Die Steuereinheit S weist weitere Schnittstellen S1, S2 zur Signalübertragung an ein zweites Feldbussystem FH bzw. ein weiteres Feldbussystem FF auf. Das zweite Feldbussystem FH ist hier ein HART Feldbussystem und das dritte Feldbussystem FF ein Foundation Fieldbus Feldbussystem. Die Feldbussysteme DP1, PA1, FH, FF in dem in Figur 1 gezeigten Ausführungsbeispiel sind dabei unterschiedlichen Typs d.h. es werden unterschiedliche Feldbus-Protokolle zur Signalübertragung in dem jeweiligen Feldbussystem verwendet.

Zudem ist ein zweites Bussystem ET2 vorgesehen, welches im gezeigten Ausführungsbeispiel zwei Anzeige-/Bedieneinheiten AB2, AB3 miteinander verbindet, welche zur Anlagenüberwachung und Visualisierung der verschiedenen Feldbussysteme DP1, PA1, FH, FF dienen. Das zweite Bussystem ET2 bildet dabei eine den Feldbussystemen DP1, PA1, FH, FF übergeordnete Kommunikationsebene. Bei dem zweiten Bussystem ET2 kann es sich bspw. um ein Unternehmensnetzwerk handeln. Über die in Reihe geschalteten Feldbusschnittstellen PAP1, PAP2, PAP3 kann von dem zweiten Bussystem ET2 aus auf die verschiedenen Feldbussysteme DP1, FH, PA1 zugegriffen werden. Dabei ermöglichen es Bedienprogramme wie bspw. ein Plant Asset Management die Feldgeräte F1, F2, F3, F4, F5 zu diagnostizieren und das jeweilige Feldbussystem zu visualisieren.

In der in Figur 1 gezeigten Prozesskotrollanordnung PKA ist das innerbetriebliche Prozesssteuerungssystem PSS von dem Unternehmensnetzwerk getrennt, d.h. das zweite Bussystem ET2 ist nicht direkt mit dem ersten Bussystem ET1 verbunden. Dies kann u.a. zur Erhöhung der Anlagensicherheit beitragen, da eine Bedienung und somit eine Einflussnahme auf den Prozessablauf durch unbefugte Nutzer verhindert werden kann.

Um dennoch bspw. eine Abfrage eines Feldgerätestatus von einem der Feldgeräte F1, F2, F3, F4, F5 zu ermöglichen, ist eine erste Feldbusschnittstelle PAP1 vorgesehen, über die das zweite Bussystem ET2 mit dem ersten Feldbussystem DP1 verbunden ist. Die erste Feldbusschnittstelle PAP1 ermöglicht dadurch die Verbindung des zweiten Bussystems ET2 mit den untergeordneten Feldbussystemen DP1, PA1, FH. Die Feldbusschnittstellen PAP2, PAP3 können dann zur Kommunikation zwischen dem übergeordneten zweiten Bussystem ET2 und den Feldbussystemen FH, PA1 eingesetzt werden. Die Feldbusschnittstellen PAP2, PAP3 sind dazu in Reihe zu der ersten Feldbusschnittstelle PAP1 geschaltet.

Das zweite Bussystem ET2 ist also über die in Reihe geschalteten Feldbusschnittstellen PAP1, PAP2, PAP3 mit mehreren unterschiedlichen Feldbussystemen DP1, FH, PA1 verbunden. Durch die gliedweise Verkettung der Feldbusschnittstellen PAP1, PAP2, PAP3 wird ein Feldbusschnittstellen-Netzwerk K gebildet. In dem in Figur 1 dargestellten Ausführungsbeispiel ist jede der Feldbusschnittstellen PAP1, PAP2, PAP3 mit einem Feldbussystem DP1, FH, PA1 verbunden. Dabei ist nur die erste der Feldbusschnittstellen PAP1 direkt mit dem zweiten Bussystem ET2 verbunden. Die erste der Feldbusschnittstellen PAP1 ermöglicht daher, wie bereits erwähnt, die Kommunikation zwischen der übergeordneten Kommunikationsebene, hier dem zweiten Bussystem ET2, und den Feldbussystemen DP1, FH, PA1. Die in Reihe mit der ersten Feldbusschnittstelle PAP1 verbundene zweite Feldbusschnittstelle PAP2 ermöglicht die Kommunikation zwischen dem übergeordneten Bussystem ET2 und einem zweiten Feldbussystem FH. Eine Signalübertragung von dem zweiten Bussystem ET2 an das zweite Feldbussystem FH erfolgt dann über die erste der Feldbusschnittstellen PAP1, welche die Signale an die zweite der Feldbusschnittstellen PAP2 weiterleitet, von wo aus die Signale in das zweite Feldbussystem FH eingespeist werden. Die dritte der in Reihe geschalteten Feldbusschnittstellen PAP3 ermöglicht die Kommunikation zwischen dem zweiten Bussystem ET2 und einem dritten Feldbussystem PA1. Eine Signalübertragung von der übergeordneten Kommunikationsebene an das dritte Feldbussystem PA1 erfolgt dann über die erste und die zweite der Feldbusschnittstellen PAP1, PAP2 an die dritte der Feldbusschnittstellen PAP3 und schließlich von der dritten der Feldbusschnittstellen PAP3 in das dritte Feldbussystem PA1. Umgekehrt findet eine Übertragung von Signalen bspw. von einem Feldgerät F4, F5 aus dem dritten Feldbussystem PA1 in die übergeordnete Kommunikationsebene, hier das zweite Bussystem ET2, ebenfalls über die in Reihe geschalteten Feldbusschnittstellen PAP1, PAP2, PAP3 statt.

Die Adressierung der Signale, die bspw. in Form von Telegrammen vorliegen, an die Feldbusschnittstellen PAP1, PAP2, PAP3 und/oder die Feldbussysteme DP1, FH, PA1 kann mittels der ersten der Feldbusschnittstellen PAP1 erfolgen. Zu diesem Zweck kann die erste der Feldbusschnittstellen PAP1 ein Prozessabbild der drei Feldbussysteme DP1, FH, PA1 enthalten und die feldbusschnittstellen-interne Adressierung der Signale vornehmen, d.h. die Telegramme mit der Adresse derjenigen der Feldbusschnittstellen PAP1, PAP2, PAP3 versehen, die mit dem Feldbussystem DP1, FH, PA1 verbunden ist, in dem sich das Feldgerät F1, F2, F3, F4, F5 befindet, für welches die Signale bestimmt sind.

Das erste Feldbussystem DP1 ist über die Schnittstelle der Steuereinheit S als auch über die erste der Feldbusschnittstellen PAP1 bedienbar. Die Steuereinheit S ist ein Master Klasse 1 in dem ersten Feldbussystem DP1 und die erste Feldbusschnittstelle PAP1 ist ein Master Klasse 2 in dem ersten Feldbussystem DP1. Von der Steuereinheit können zyklische Abfragen und von der ersten Feldbusschnittstelle PAP1 azyklische Abfragen in dem ersten Feldbussystem DP1 vorgenommen werden. Wie bereits erwähnt, ist das erste Feldbussystem DP1 über einen nicht transparenten Segmentkoppler SK mit dem Profibus PA Feldbussystem PA1 verbunden. Daher können bspw. keine das Profibus PA Segment betreffende Diagnoseinformationen mittels der ersten der Feldbusschnittstellen PAP1 aus dem Profibus DP Segment mitgelesen werden. Die dritte der Feldbusschnittstellen PAP3 ist jedoch mit dem Profibus PA Segment verbunden. Aufgrund der Reihenschaltung der Feldbusschnittstellen PAP1, PAP2, PAP3 ist es daher möglich Diagnoseinformationen aus dem Profibus PA Segment an bspw. eine Anzeige-/Bedieneinheit AB2, AB3 des zweiten Bussystems ET2 zu übermitteln. Umgekehrt kann von einer Anzeige-/Bedieneinheit AB2, AB3 in der übergeordneten Kommunikationsebene, hier des zweiten Bussystems ET2, durch die erfindungsgemäße Anordnung von Feldbusschnittstellen PAP1, PAP2, PAP3 über eine einzige Adresse (nämlich die der ersten der Feldbusschnittstellen PAP1) in der übergeordneten Kommunikationsebene, hier dem zweiten Bussystem, sowohl das Profibus PA als auch das Profibus DP Segment angesteuert werden und/oder bspw. Diagnoseinformationen aus einem Feldgerät F2, F3 des Profibus PA Feldbussystems PA1 ausgelesen werden. Die entsprechenden Signale können über die in Reihe geschalteten Feldbusschnittstellen PAP1, PAP2 übertragen und der nicht transparente Segmentkoppler SK dadurch umgangen werden.

Das zweite Bussystem ET2 ist außerdem mit einer weiteren Feldbusschnittstelle PAP4 verbunden, die an ein Foundation Fieldbus Feldbussystem FF angeschlossen ist. Dieses Foundation Fieldbus Feldbussystem FF wiederum ist an die Schnittstelle S2 der Steuereinheit S angeschlossen. Diese weitere Feldbusschnittstelle PAP4 ist parallel zu der ersten der Feldbusschnittstellen PAP1 an das zweite Bussystem ET2 angeschlossen und über eine eigene Adresse in das zweite Bussystem ET2 integriert.

Bei dem ersten und zweiten Bussystem ET1, ET2 kann es sich um hierarchisch gleichgestellte Kommunikationsebenen handeln, welche das Ethernet Protokoll verwenden.

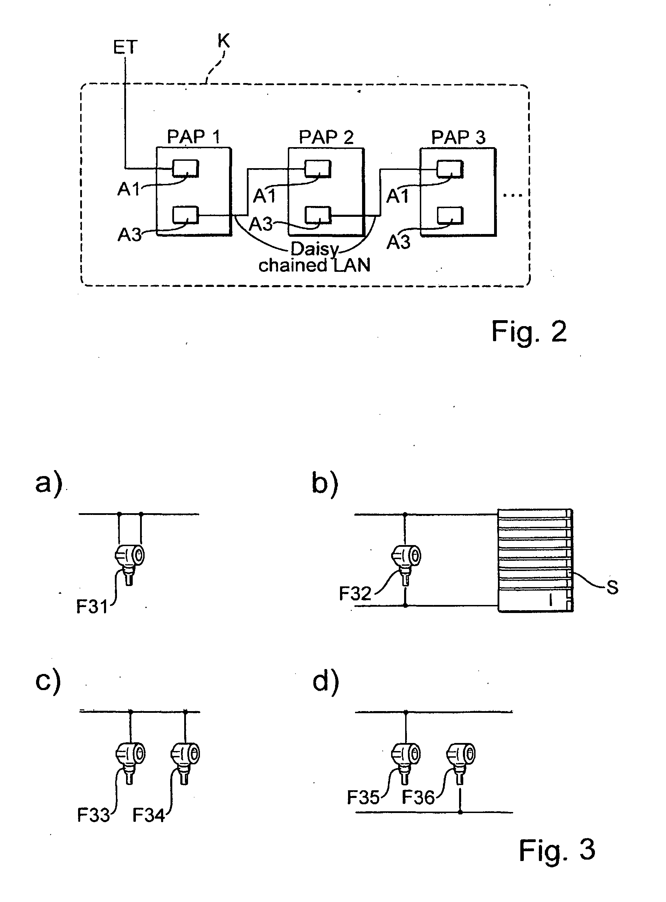

Figur 2 zeigt eine Anordnung von Feldbusschnittstellen PAP1, PAP2, PAP3. In dem in Figur 2 gezeigten Ausführungsbeispiel sind die Feldbusschnittstellen PAP1, PAP2, PAP3 durch eine sog. Daisy Chain miteinander verbunden.

Die erste der Feldbusschnittstellen PAP1 weist einen ersten Anschluss A1 auf, mit dem es mit der übergeordneten Kommunikationsebene ET, bspw. dem zweiten Bussystem ET2 aus Figur 1 verbunden ist. Die erste Feldbusschnittstelle PAP1 weist zudem einen zweiten Anschluss, nicht gezeigt, auf, der dazu dient, die erste Feldbusschnittstelle PAP1 mit einem Feldbussystem, bspw. dem ersten Feldbussystem DP1 aus Figur 1 zu verbinden. Über einen dritten Anschluss A3 ist die erste der Feldbusschnittstellen PAP1 mit einer zweiten der Feldbusschnittstellen PAP2 verbunden. Diese zweite der Feldbusschnittstellen PAP2 weist ebenfalls drei Anschlüsse auf. Über den ersten Anschluss A1 ist die zweite Feldbusschnittstelle PAP2 mit der ersten Feldbusschnittstelle PAP1 verbunden, während sie über den dritten Anschluss A3 mit einer dritten Feldbusschnittstelle PAP3 verbunden ist. Mittels des dritten Anschlusses A3 ist die zweite Feldbusschnittstelle PAP2 mit dem ersten Anschluss A1 einer dritten Feldbusschnittstelle PAP3 verbunden. Über den zweiten Anschluss, nicht gezeigt, ist die zweite Feldbusschnittstelle PAP2 mit einem Feldbussystem, bspw. dem zweiten Feldbussystem FH aus Figur 1, verbunden. Die dritte Feldbusschnittstelle PAP3 ist über ihren zweiten Anschluss, nicht gezeigt, ebenfalls mit einem Feldbussystem, bspw. dem dritten Feldbussystem PA1 aus Figur 1, verbunden.

Die von der übergeordneten Kommunikationsebene ET an eines der Feldgeräte in einem Feldbussystem gesendeten Signale werden zumindest an die erste der

Feldbusschnittstellen PAP1 übertragen. In der ersten Feldbusschnittstelle PAP1 werden diese Signale an diejenige der Feldbusschnittstellen PAP2, PAP3 adressiert und weitergeleitet, die mit dem Feldbussystem verbunden ist, in dem sich das entsprechende Feldgerät befindet, für welches die Signale bestimmt sind. Die Signale werden dann über die Kette von Feldbusschnittstellen PAP1, PAP2, PAP3 bis zu der Feldbusschnittstelle übertragen, die mit dem Feldbussystem verbunden ist, für welches das Signal bestimmt war. Das Feldbusschnittstellen-Netzwerk K kann natürlich auch aus mehr als den in Figur 2 gezeigten drei Feldbusschnittstellen bestehen.

Es ist bspw. auch möglich weitere Feldbusschnittstellen in Reihe mit den Feldbusschnittstellen PAP1, PAP2, PAP3 zu verbinden. Wird bspw. eine weitere Feldbusschnittstelle in das Feldbusschnittstellen-Netzwerk K angeschlossen, so wird dieser neuen Feldbusschnittstelle automatisch eine Adresse in dem Feldbusschnittstellen-Netzwerk K zugewiesen. Von der übergeordneten Kommunikationsebene ET muss dafür keine neue IP-Adresse vergeben werden. Etwaige Informationen oder Abfragen von Feldgeräten aus dem übergeordneten Bussystem ET werden lediglich an die erste der Feldbusschnittstellen PAP1 gesendet, welche diese Daten dann weiterprozessiert.

Bei den Anschlüssen A1, A3 der Feldbusschnittstellen kann es sich um Ethernet Anschlüsse handeln.

Figur 3 zeigt unterschiedliche redundante Ausgestaltungen eines Feldbussystems mit Feldgeräten F31, F32, F33, F34, F35, F36. Um im Fall einer Störung weiterhin den Betrieb der Anlage zu gewährleisten, sind Sicherheitsmaßnahmen wie bspw. eine redundante Auslegung des Feldbussystems bzw. von Feldbusgeräten notwendig. Eine solche Redundanz kann auf verschiedene Arten erreicht werden:
In Figur 3 a) ist ein Feldgerät F31 über zwei unterschiedliche Adressen in einem Feldbussystem registriert.
In Figur 3 b) ist ein Feldgerät F32 an zwei unabhängige Feldbussysteme angeschlossen. In jedem der Feldbussysteme hat das Feldgerät F32 eine andere Adresse. Die beiden Feldbussysteme werden von einer Steuereinheit S angesprochen. Ist dies der Fall spricht man von Linienredundanz.
In Figur 3 c) sind zwei Feldgeräte F33, F34 desselben Typs in einem Feldbussystem vorhanden, wobei jedes der Feldgeräte F33, F34 eine eigene Feldbusadresse hat.
In Figur 3 d) sind zwei Feldgeräte F35, F36 desselben Typs in zwei voneinander unabhängigen Feldbussystemen vorhanden.

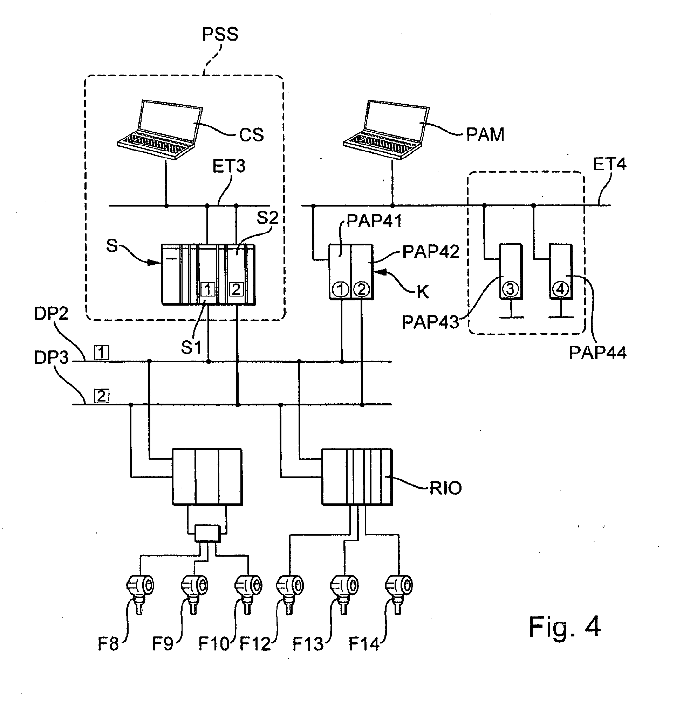

Figur 4 zeigt schematisch den Aufbau einer Prozesskontrollanordnung PKA mit (linien-)redundanten Feldbussystemen DP2, DP3. Die Steuereinheit S des Prozesssteuerungssystems PSS verfügt über zwei Schnittstellen S1, S2 die jeweils mit einem Feldbussysteme DP2, DP3 verbunden ist. Die beiden Feldbussysteme DP2, DP3 sind dabei von einander unabhängig. Die Redundanz besteht dabei aus einer doppelten Ausführung eines Profibus DP Segments.

Die erste Schnittstelle S1 der Steuereinheit S ist mit der ersten Ausführung des Profibus DP Segments DP2 verbunden, während die zweite Schnittstelle S2 der Steuereinheit S mit der zweiten Ausführung des Profibus DP Segments DP3 verbunden ist. In dem in Figur 4 gezeigten Ausführungsbeispiel sind ein Gateway G, in diesem Fall ein Profibus DP/PA Segmentkoppler SK und eine Remote I/O-Einheit RIO über die Feldbussysteme DP2, DP3 verbunden. Es können auch weitere Teilnehmer, nicht gezeigt, an die Feldbusysteme DP2, DP3 angeschlossen sein. An die Remote I/O-Einheit RIO sind Feldgeräte F12, F13, F14 angeschlossen, die gemäß dem HART-Standard kommunizieren.

Wie bereits beschrieben, ist es bekannt zu Diagnose und/oder Visualisierungszwecken einen weiteren Zugang zu dem Feldbussystem DP2, DP3 einzurichten, der getrennt von dem Prozesssteuerungssystem PSS erfolgt.

Dafür lassen sich bspw. zwei Feldbusschnittstellen PAP43, PAP44 verwenden, die getrennt voneinander an eine übergeordnete Kommunikationsebene, in diesem Fall ein zweites Bussystem ET4, angeschlossen sind. Eine dieser Feldbusschnittstellen PAP43 ist an das erste der redundanten Feldbussysteme DP2 angeschlossen, bspw. dasjenige welches aktuell im Betrieb ist. Die andere der Feldbusschnittstellen PAP44 ist dann mit demjenigen der redundanten Feldbussysteme DP3 verbunden, welches im Falle einer Störung des ersten Feldbussystems DP2 zum Einsatz kommt.

Dies hat jedoch den Nachteil, dass über eine solche Feldbusschnittstelle PAP44 angeschlossene Bedienprogramme wie bspw. Plant Asset Management PAM Systeme Umschaltungen im redundanten System DP3 weder mitverfolgen, noch die entsprechende Netzwerktopologie und Adresspfade anpassen.

Daher kann es von Vorteil sein, an dem übergeordneten Kommunikationssystem ET4 angeschlossene PAM-Systeme bezüglich Redundanzumschaltungen aktuell halten zu können.

Dafür können wie in Figur 4 dargestellt zwei Feldbusschnittstellen PAP41, PAP42 verwendet werden, die wie in Figur 2 dargestellt in Reihe miteinander verbunden sind. Die Feldbusschnittstellen PAP41, PAP42 hören jeweils am Feldbussystem DP2 mit und stellen dem PAM-System Informationen bezüglich" redundanter Umschaltungen zur Verfügung. Das PAM System kann damit entsprechende Aktualisierungen in der Netzwerktopologie und Adressierungen automatisch anpassen. Dadurch kann das PAM-System auch wenn es nicht in das Prozesssteuerungssystem PSS integriert ist, bei redundantem Aufbau des Feldbussystems DP2, DP3 aktuell gehalten werden.

### Bezugszeichenliste

- PKA: Prozesskontrollanordnung
- PSS: Prozesssteuerungssystem
- PAM: Plant Asset Management
- CS: Anzeige-/Bedieneinheit des Prozesssteuerungssystems
- ET: Übergeordnete Kommunikationsebene
- ET1: Erstes Bussystem
- ET2: Zweites Bussystem
- ET3: Steuernetzwerk
- ET4: Unternehmensnetzwerk
- AB1: Anzeige-/Bedieneinheit des Prozesssteuerungssystems
- AB2: Anzeige-/Bedieneinheit des Unternehmensnetzwerks
- AB3: Anzeige-/Bedieneinheit des Unternehmensnetzwerks
- S: Steuereinheit
- S1: Erste Schnittstelle der Steuereinheit
- SB: Zweite Schnittstelle der Steuereinheit
- K: Feldbusschnittstellen-Netzwerk
- F1: Feldgerät im Profibus DP Feldbussystem
- F2: Feldgerät im Profibus PA Feldbussystem
- F3: Feldgerät im Profibus PA Feldbussystem
- F4: Feldgerät im HART Feldbussystem
- F5: Feldgerät im HART Feldbussystem
- F6: Feldgerät im Foundation Fieldbus Feldbussystem
- F7: Feldgerät im Foundation Fieldbus Feldbussystem
- F8: Feldgerät
- F9: Feldgerät
- F10: Feldgerät
- F12: Feldgerät
- F13: Feldgerät
- F14: Feldgerät
- F31: Feldgerät mit zwei Feldbusadressen in einem Feldbussystem
- F32: Feldgerät jeweils einer Feldbusadresse in zwei voneinander unabhängigen Feldbussystemen
- F33: Erste Feldgerät eines Bauart A in einem Feldbussystem FB
- F34: Zweites Feldgerät der Bauart A in dem Feldbussystem FB
- F35: Feldgerät einer Bauart B in einem Feldbussystem FB1
- F36: Feldgerät der Bauart B in einem Feldbussystem FB1
- PAP1: Erste der Feldbusschnittstellen
- PAP2: Zweite der Feldbusschnittstellen
- PAP3: Dritte der Feldbusschnittstellen
- PAP4: Weitere Feldbusschnittstelle
- PAP41: Erste der Feldbusschnittstellen
- PAP42: Zweite der Feldbusschnittstellen
- PAP43: Feldbusschnittstelle
- PAP44: Andere Feldbusschnittstelle
- A1: Erster Anschluss
- A3: Dritter Anschluss
- DP1: Profibus DP Feldbussystem
- PA1: Profibus PA Feldbussystem
- DP2: Erstes Profibus DP Feldbussystem
- DP3: Zweites Profibus DP Feldbussystem
- SK: Segmentkoppler
- G: Gateway
- RIO: Remote I/O-Einheit

## Patentansprüche

1. Prozesskontrollanordnung (PKA) für eine Anlage der Prozess- und/oder Automatisierungstechnik,
mit mehreren Feldbussystemen (DP1, PA1, FH), und mit mehreren Feldbusschnittstellen (PAP1, PAP2, PAP3),
wobei jedes der Feldbussysteme (DP1, PA1, FH) mit wenigstens einer der Feldbusschnittstellen (PAP1, PAP2, PAP3) verbunden ist,wobei die Feldbusschnittstellen (PAP1, PAP2, PAP3) zur Kommunikation zwischen den Feldbussystemen (DP1, PA1, FH) und einer den Feldbussystemen übergeordneten Kommunikationsebene (ET2) dienen,
**dadurch gekennzeichnet,**
**dass** nur eine erste der Feldbusschnittstellen (PAP1) unmittelbar mit der übergeordneten Kommunikationsebene (ET2) verbunden ist, und
**dass** die Feldbusschnittstellen (PAP1, PAP2, PAP3) beginnend mit der ersten der Feldbusschnittstellen (PAP1) in Reihe miteinander verbunden sind, und
**dass** die Feldbusschnittstellen (PAP1, PAP2. PAP3) ein eigenständiges Feldbusschnittstellen-Netzwerk (K), insbesondere ein eigenständiges Local Area Network LAN, bilden, in welchem die Feldbusschnittstellen (PAP1, PAP2, PAP3) in Reihe miteinander verbunden sind, und
das Feldbusschnittstellen-Netzwerk (K) ein selbstkonfigurierendes Netzwerk ist.

2. Prozesskontrollanordnung (PKA) nach Anspruch 1,
**dadurch gekennzeichnet,**
**dass** die erste der Feldbusschnittstellen (PAP1) in Reihe mit einer zweiten der Feldbusschnittstellen (PAP2) verbunden ist, und
**dass** die zweite der Feldbusschnittstellen (PAP2) in Reihe, insbesondere unmittelbar, hinter der ersten der Feldbusschnittstellen (PAP1) mit der ersten der Feldbusschnittstellen (PAP1) verbunden ist.

3. Prozesskontrollanordnung (PKA) nach Anspruch 1 oder 2,
**dadurch gekennzeichnet,**
**dass** jede einer vorhergehenden Feldbusschnittstelle (PAP1, PAP2), insbesondere unmittelbar, nachfolgende Feldbusschnittstelle (PAP2, PAP3) mit der vorhergehenden Feldbusschnittstelle (PAP1, PAP2) in Reihe verbunden ist.

4. Prozesskontrollanordnung (PKA) nach einem der Ansprüche 1, 2 oder 3,
**dadurch gekennzeichnet,**
**dass** die Feldbusschnittstellen (PAP1, PAP2, PAP3) topologisch betrachtet entlang einer Linie angeordnet sind.

5. Prozesskontrollanordnung (PKA) nach einem der vorherigen Ansprüche,
**dadurch gekennzeichnet,**
**dass** es sich bei wenigstens zwei der Feldbussysteme (DP2, DP3) um zueinander linienredundante Feldbussysteme handelt.

6. Prozesskontrollanordnung (PKA) nach dem vorherigen Anspruch,
**dadurch gekennzeichnet,**
**dass** es sich bei den zueinander linienredundanten Feldbussystemen (DP2, DP3) um ein primäres Feldbussystem (DP2) und um ein sekundäres (DP3) Feldbussystem handelt, wobei die Kommunikation zwischen Teilnehmern (G, RIO) der zueinander linienredundanten Feldbussysteme (DP2, DP3), insbesondere in einem (störungsfreien) Normalbetrieb, mittels des primären Feldbussystems (DP2) erfolgt, und
**dass**, in dem Fall, dass die Kommunikation zwischen den Teilnehmem (G, RIO) mittels des sekundären Feldbussystems (DP3) erfolgt, der Zugriff von der übergeordneten Kommunikationsebene (ET4) auf einen Teilnehmer (G. RIO) des redundanten Feldbussystems (DP2, DP3), insbesondere automatisch, über die dem sekundären Feldbussystem (DP3) zugeordnete Feldbusschnittstelle (PAP42) erfolgt.

7. Prozesskontrollanordnung (PKA) nach einem der vorherigen Ansprüche,
**dadurch gekennzeichnet,**
**dass** ein von einem Teilnehmer (AB2, AB3) der übergeordneten Kommunikationsebene (ET4, ET2) gesendetes, für eines der Feldbussysteme (DP1, PA1, FH; DP2, DP3) bestimmtes Signal wenigstens abschnittsweise über die in Reihe verbundenen Feldbusschnittstellen (PAP1, PAP2, PAP3) übertragbar ist.

8. Prozesskontrollanordnung (PKA) nach einem der vorherigen Ansprüche,
**dadurch gekennzeichnet,**
**dass** ein Prozessabbild der an die Feldbusschnittstellen (PAP1, PAP2, PAP3) angeschlossenen Feldbussysteme (DP1, PA1, FH; DP2, DP3) wenigstens teilweise in wenigstens einer der Feldbusschnittstellen (PAP1, PAP2, PAP3) gespeichert ist, welches Prozessabbild Daten von Teilnehmern (F1, F2, F3, F4, F5) der Feldbussysteme (DP1. PA1, FH; DP2, DP3) enthält.

9. Prozesskontrollanordnung (PKA) nach einem der vorherigen Ansprüche,
**dadurch gekennzeichnet,**
**dass** wenigstens eine der Feldbusschnittstellen (PAP1, PAP2, PAP3) einen ersten Anschluss (A1) aufweist, der dazu dient,
die Feldbusschnittstelle (PAP1, PAP2, PAP3) entweder mit der übergeordneten Kommunikationsebene (ET, ET1) oder einer vorhergehenden Feldbusschnittstelle (PAP1, PAP2, PAP3) zu verbinden;
einen zweiten Anschluss aufweist, der dazu dient,
die Feldbusschnittstelle (PAP1, PAP2, PAP3) mit dem Feldbussystem (DP1, PA1, FH; DP2, DP3) zu verbinden; und
einen dritten Anschluss aufweist, der dazu dient,
die Feldbusschnittstelle (PAP1, PAP2, PAP3) mit einer weiteren, insbesondere baugleichen, Feldbusschnittstelle (PAP1, PAP2, PAP3) zu verbinden.

10. Prozesskontrollanordnung (PKA) nach dem vorherigen Anspruch,
**dadurch gekennzeichnet,**
**dass** wenigstens die erste der Feldbusschnittstellen (PAP1) eine elektrische und/oder elektronische Einheit aufweist, die dazu dient,
ein über den dritten Anschluss abgreifbares Signal zu erzeugen,
welches erzeugte Signal im Wesentlichen einem über den ersten Anschluss (A1) empfangenen Signal entspricht oder ein solches empfangenes Signal repräsentiert.

11. Prozesskontrollanordnung (PKA) nach dem vorhergehenden Anspruch,
**dadurch gekennzeichnet,**
**dass** der erste Anschluss (A1) als Eingang und der dritte Anschluss als Ausgang für von der übergeordneten Kommunikationsebene (ET, ET2) an das Feldbussystem (DP1, PA1, FH: DP2, DP3) übertragenen Signale dient.

## Claims

1. Process control arrangement (PKA) for a system used in process engineering and/or automation engineering,
with several fieldbus systems (DP1, PA2, FH) and with several fieldbus interfaces (PAP1, PAP2, PAP3),
wherein each of the fieldbus systems (DP1, PA2, FH) is connected to at least one of the fieldbus interfaces (PAP1, PAP2, PAP3), wherein the fieldbus interfaces (PAP1, PAP2, PAP3) are used for communication between the fieldbus systems (DP1, PA2, FH) and a communication level (ET2) hierarchically above the fieldbus systems, **characterized in that**
only a first of the fieldbus interfaces (PAP1) is directly connected to the higher-order communication level (ET2), and
beginning with the first of the fieldbus interfaces (PAP1), the fieldbus interfaces are interconnected in series, and
the fieldbus interfaces (PAP1, PAP2, PAP3) form an independent fieldbus interface network (K), notably an independent local area network (LAN) in which the fieldbus interfaces (PAP1, PAP2, PAP3) are interconnected in series, and
**in that** the fieldbus interface network (K) is a self-configuring network.

2. Process control arrangement (PKA) as claimed in Claim 1,
**characterized in that**
the first of the fieldbus interfaces (PAP1) is connected in series to a second of the fieldbus interfaces (PAP2), and
**in that** the second of the fieldbus interfaces (PAP2) is connected in series to the first of the fieldbus interfaces (PAP1), particularly directly downstream of the first of the fieldbus interfaces (PAP1).

3. Process control arrangement (PKA) as claimed in Claim 1 or 2,
**characterized in that**
each fieldbus interface (PAP2, PAP3) following, particularly immediately, a preceding fieldbus interface (PAP1, PAP2) is connected in series to the preceding fieldbus interface (PAP1, PAP2).

4. Process control arrangement (PKA) as claimed in Claim 1, 2 or 3
**characterized in that**
the fieldbus interfaces (PAP1, PAP2, PAP3) are arranged, from a topological perspective, along a line.

5. Process control arrangement (PKA) as claimed in one of the previous claims
**characterized in that**
at least two of the fieldbus systems (DP2, DP3) are fieldbus systems that are redundant in line in relation to one another.

6. Process control arrangement (PKA) as claimed in the previous claim
**characterized in that**
that fieldbus systems (DP2, DP3) redundant in line constitute a primary fieldbus system (DP2) and a secondary fieldbus system (DP3), wherein communication between the users (G, RIO) of the fieldbus systems (DP2, DP3) that are redundant in line, particularly during normal (trouble-free) operation, takes place using the primary fieldbus system (DP2), and
**in that** in the event that communication takes place between the users (G, RIO) using the secondary fieldbus system (DP3), the higher-order communication level (ET4) accesses a user (G, RIO) of the redundant fieldbus system (DP2, DP3), particularly automatically, via the fieldbus interface (PAP42) assigned to the secondary fieldbus system (DP3).

7. Process control arrangement (PKA) as claimed in one of the previous claims
**characterized in that**
a signal sent by a user (AB2, AB3) of the higher-order communication level (ET4, ET2) and destined for one of the fieldbus systems (DP1, PA1, FH ; DP2, DP3) can be transmitted, at least in part, via the fieldbus interfaces (PAP1, PAP2, PAP3) connected in series.

8. Process control arrangement (PKA) as claimed in one of the previous claims
**characterized in that**
a process representation of the fieldbus systems (DP1, PA1, FH ; DP2, DP3) connected to the fieldbus interfaces (PAP1, PAP2, PAP3) is saved at least partially in at least one of the fieldbus interfaces (PAP1, PAP2, PAP3), said process representation containing data from users (F1, F2, F3, F4, F5) of the fieldbus systems (DP1, PA1, FH ; DP2, DP3).

9. Process control arrangement (PKA) as claimed in one of the previous claims
**characterized in that**
at least one of the fieldbus interfaces (PAP1, PAP2, PAP3)
has a first connection (A1), which is used to
connect the fieldbus interface (PAP1, PAP2, PAP3) to either the higher-order communication level (ET, ET1) or a preceding fieldbus interface (PAP1, PAP2, PAP3); has a second connection, which is used to
connect the fieldbus interface (PAP1, PAP2, PAP3) to the fieldbus system (DP1, PA1, FH; DP2, DP3); and
has a third connection, which is used to
connect the fieldbus interface (PAP1, PAP2, PAP3) to another fieldbus interface (PAP1, PAP2, PAP3), particularly one with an identical construction.

10. Process control arrangement (PKA) as claimed in the previous claim
**characterized in that**
at least the first of the fieldbus interfaces (PAP1) has an electrical and/or electronic unit, which is used to
generate a signal that can be captured via the third connection,
said generated signal corresponding essentially to a signal received via the first connection (A1), or representing such a signal received.

11. Process control arrangement (PKA) as claimed in the previous claim
**characterized in that**
the first connection (A1) acts as the input and the third connection acts as the output for signals transmitted from the higher-order communication level (ET, ET2) to the fieldbus system (DP1, PA1, FH ; DP2, DP3).

## Revendications

1. Configuration de contrôle de process (PKA) destinée à une installation de la technique d'automatisation et/ou de process,
avec plusieurs systèmes de bus de terrain (DP1, PA2, FH), et avec plusieurs interfaces de bus de terrain (PAP1, PAP2, PAP3),
pour laquelle chacun des systèmes de bus de terrain (DP1, PA2, FH) est relié avec au moins l'une des interfaces de bus de terrain (PAP1, PAP2, PAP3), ces dernières servant à la communication entre les systèmes de bus de terrain (DP1, PA2, FH) et un niveau de communication (ET2) hiérarchiquement supérieur aux systèmes de bus de terrain,
**caractérisée en ce**
**que** seulement une première des interfaces de bus de terrain (PAP1) est reliée directement avec le niveau de communication (ET2) hiérarchiquement supérieur, et
en ce que les interfaces de bus de terrain (PAP1, PAP2, PAP3) sont interconnectées en série, en commençant par la première des interfaces de bus de terrain (PAP1), et
en ce que les interfaces de bus de terrain (PAP1, PAP2, PAP3) constituent un réseau d'interfaces de terrain (K) autonome, notamment un réseau local LAN autonome, au sein duquel les interfaces de bus de terrain (PAP1, PAP2, PAP3) sont interconnectées en série, et
en ce que le réseau d'interfaces de bus de terrain (K) est un réseau autoconfigurable.

2. Configuration de contrôle de process (PKA) selon la revendication 1,
**caractérisée en ce**
**que** la première des interfaces de bus de terrain (PAP1) est reliée en série avec une deuxième des interfaces de bus de terrain (PAP2), et
en ce que la deuxième des interfaces de bus de terrain (PAP2) est reliée en série, notamment directement derrière la première des interfaces de bus de terrain (PAP1), avec la première des interfaces de bus de terrain (PAP1).

3. Configuration de contrôle de process (PKA) selon la revendication 1 ou 2,
**caractérisée en ce**
**que** chaque interface de bus de terrain (PAP2, PAP3) suivant, notamment immédiatement, une interface de bus de terrain (PAP1, PAP2) précédente, est reliée en série avec l'interface de bus de terrain (PAP1, PAP2) précédente.

4. Configuration de contrôle de process (PKA) selon la revendication 1, 2 ou 3,
**caractérisée en ce**
**que** les interfaces de bus de terrain (PAP1, PAP2, PAP3) sont, d'un point de vue topologique, disposées le long d'une ligne.

5. Configuration de contrôle de process (PKA) selon l'une des revendications précédentes,
**caractérisée en ce**
**qu'**il s'agit, concernant au moins deux des systèmes de bus de terrain (DP2, DP3), de systèmes de bus de terrain redondants en ligne.

6. Configuration de contrôle de process (PKA) selon la revendication précédente,
**caractérisée en ce**
**qu'**il s'agit, concernant les systèmes de bus de terrain (DP2, DP3) redondants en ligne, d'un système de bus de terrain primaire (DP2) et d'un système de bus de terrain secondaire (DP3), la communication entre les utilisateurs (G, RIO) des systèmes de bus de terrain (DP2, DP3) redondants en ligne, notamment dans un fonctionnement normal (sans dérangement), étant réalisée au moyen du système de bus de terrain primaire (DP2), et
en ce que, dans le cas où la communication entre les utilisateurs (G, RIO) est réalisée au moyen du système de bus de terrain secondaire (DP3), l'accès depuis le niveau de communication (ET4) hiérarchiquement supérieur à un utilisateur (G, RIO) du système de bus de terrain redondant (DP2, DP3) étant réalisé, notamment automatiquement, par l'intermédiaire de l'interface de bus de terrain (PAP42) assignée au système de bus de terrain secondaire (DP3).

7. Configuration de contrôle de process (PKA) selon l'une des revendications précédentes,
**caractérisée en ce**
**qu'**un signal émis par un utilisateur (AB2, AB3) du niveau de communication (ET4, ET2) hiérarchiquement supérieur, destiné à l'un des systèmes de bus de terrain (DP1, PA1, FH ; DP2, DP3), est transmissible au moins partiellement par l'intermédiaire des interfaces de bus de terrain (PAP1, PAP2, PAP3) reliées en série.

8. Configuration de contrôle de process (PKA) selon l'une des revendications précédentes,
**caractérisée en ce**
**qu'**est enregistrée une représentation du process des systèmes de bus de terrain (DP1, PA1, FH ; DP2, DP3) raccordés aux interfaces de bus de terrain (PAP1, PAP2, PAP3), au moins partiellement dans au moins l'une des interfaces de bus de terrain (PAP1, PAP2, PAP3), laquelle représentation du process contient des données d'utilisateurs (F1, F2, F3, F4, F5) des systèmes de bus de terrain (DP1, PA1, FH ; DP2, DP3).

9. Configuration de contrôle de process (PKA) selon l'une des revendications précédentes,
**caractérisée en ce**
**qu'**au moins l'une des interfaces de bus de terrain (PAP1, PAP2, PAP3) présente une première connexion (A1), qui sert à
relier l'interface de bus de terrain (PAP1, PAP2, PAP3) soit avec le niveau de communication (ET, ET1) hiérarchiquement supérieur, soit avec une interface de bus de terrain (PAP1, PAP2, PAP3) précédente ;
présente une deuxième connexion (A2), qui sert à
relier l'interface de bus de terrain (PAP1, PAP2, PAP3) avec le système de bus de terrain (DP1, PA1, FH ; DP2, DP3) ; et
présente une troisième connexion (A3), qui sert à
relier l'interface de bus de terrain (PAP1, PAP2, PAP3) avec une autre interface de bus de terrain (PAP1, PAP2, PAP3), notamment de conception identique.

10. Configuration de contrôle de process (PKA) selon l'une des revendications précédentes,
**caractérisée en ce**
**qu'**au moins la première des interfaces de bus de terrain (PAP1) présente une unité électrique et/ou électronique, qui sert à
générer un signal pouvant être prélevé par l'intermédiaire de la troisième connexion, lequel signal généré correspond pour l'essentiel à un signal reçu par l'intermédiaire de la première connexion (A1), ou représente un tel signal reçu.

11. Configuration de contrôle de process (PKA) selon l'une des revendications précédentes,
**caractérisée en ce**
**que** la première connexion (A1) sert d'entrée et la troisième de sortie pour les signaux transmis au système de bus de terrain (DP1, PA1, FH ; DP2, DP3) par le niveau de communication (ET, ET2) hiérarchiquement supérieur.
